# EUROPÄISCHE PATENTSCHRIFT

(11) **EP 2 507 092 B1**
(45) Veröffentlichungstag und Bekanntmachung des Hinweises auf die Patenterteilung: **30.03.2016**
(21) Anmeldenummer: 10805680.5
(22) Anmeldetag: 01.12.2010
(51) Int. Cl.: B60P 7/13

(54) **VERRIEGELUNGSVORRICHTUNG FÜR CONTAINER**
LOCKING DEVICE FOR A CONTAINER
DISPOSITIF DE VERROUILLAGE POUR CONTENEUR

(30) Priorität: 01.12.2009 DE 202009016268 U
(43) Veröffentlichungstag der Anmeldung: 10.10.2012
(73) Patentinhaber: R.E.A. Patente GmbH & Co. KG, 24814 Sehestedt (DE)
(72) Erfinder: METTERNICH, Heinz-Rüdiger, 21279 Eversen-Heide (DE)
(74) Vertreter: Stüven, Ralf
(86) Internationale Anmeldenummer: PCT/DE2010/075149
(87) Internationale Veröffentlichungsnummer: WO 2011/066829

(56) Entgegenhaltungen:
- DE-A1-102007 007 067
- US-A- 3 682 432
- US-B2- 6 692 203

## Beschreibung

Die Erfindung betrifft eine Verriegelungsvorrichtung zur Verriegelung eines Containers auf einer Ladefläche, insbesondere für Straßenfahrzeuge oder Eisenbahntragwagen, mit einem Gehäuse, mit mindestens einem um eine vertikale Achse in einer schraubförmigen Führung um ca. 90° dreh- und absenkbaren Verriegelungszapfen mit Pilzkopf, der im Ausgangszustand über eine der Öffnungen in einem der Eckbeschläge des Containers eingeführt werden kann und im Transportzustand den Container über die Öffnung des Eckbeschlags hintergreifende Teile des Pilzkopfes sichert, und mit einem Mechanismus zur Betätigung des Verriegelungszapfens, wobei eine den Verriegelungszapfen umgebende, im Gehäuse vertikal verschiebbar geführte Druckplatte vorgesehen ist, die in vertikaler Richtung vom Ausgangszustand mittels des auflastenden Containers in das Gehäuse absenkbar ist, wobei ein Mitnahmemittel zwischen Verriegelungszapfen und Druckplatte vorgesehen ist, so dass beim Absenken der Druckplatte der Verriegelungszapfen abgesenkt und gleichzeitig über die schraubenförmige Führung gedreht wird, dadurch gekennzeichnet, dass ein Sicherungsmittel vorgesehen ist, das eine unbeabsichtigte Rückstellung aus dem erreichten Transportzustand verhindert, wobei das Sicherungsmittel eine Feder vorbelastete Sperre aufweist, die bei Erreichen des Transportzustandes Feder belastet in eine Sicherungsposition verrutscht oder verschwenkt, wobei der Sperre eine Falle zugeordnet ist, die bei manueller oder ferngesteuerter Betätigung der Sperre diese in einer Position hält, in der die Sicherung des Transportzustandes deaktiviert ist.

Es ist bekannt, Container auf einem Straßenfahrzeug zu befestigen, indem Verriegelungsteile in die Eckbeschläge des Containers hineingebracht werden und dort durch Verriegelung, Spreizen oder Verschwenken den Eckbeschlag und damit den Container auf dem Fahrzeug befestigen. So können beispielsweise die Verriegelungsteile über Gewindebolzen in die Verriegelungslage gebracht werden, d. h. die Verriegelung kann von Hand durchgeführt werden. Es ist auch bekannt, die Verriegelung von Containern auf Fahrzeugen mit Hilfe von pneumatisch wirkenden Einrichtungen zu bewerkstelligen.

In der EP 1 800 946 A2 des Anmelders erfolgt die Versorgung der zur Betätigung erforderlichen Pneumatikzylinder über einen Weg-Kraft-Wandler in Form eines Balges, der von der Gewichtskraft des Containers betätigt wird.

Aus der DE 10 2007 007 067 A1 ist ein Verriegelungsteil für einen Container auf einem Fahrzeug bekannt, das ebenfalls eine Verriegelung des Containers auf dem Fahrzeug durch die Absetzbewegung und die Gewichtskraft des Containers erreicht, wobei von einem Betätigungsnocken über Umlenkhebel und Federn ein Verdrehen und Absenken des Verriegelungszapfens erreicht wird.

Nachteilig ist jedoch, dass die beiden vorgenannten allein von der Gewichtskraft des Containers ausgelösten Verriegelungsmechanismen technisch sehr aufwendig sind und daher aus einer Vielzahl von Bauteilen bestehen, entsprechend wartungsintensiv und in ihrer Herstellung kostenaufwendig sind. Ferner ist ein erheblicher Platzbedarf für das Vorsehen der Hebel- und Federanordnungen bzw. des Weg-Kraft-Wandlers mit den zugeordneten Betätigungselementen erforderlich. Damit ist der Anwendungsbereich dieser bekannten Verriegelungseinrichtungen aus wirtschaftlichen und/oder aus technischen Gründen begrenzt. Wirtschaftlich erfolgreich kann eine Verriegelungsvorrichtung für Container für den Einsatz auf Lastkraftwagen (Chassis) oder Eisenbahntragwagen nur sein, wenn die Herstellungskosten nur geringfügig über den Herstellungskosten gewöhnlicher Twist-Locks liegen und die Verriegelungsvorrichtungen im rauen Dauereinsatz zuverlässig bei allenfalls geringem Wartungsaufwand funktionieren.

Aus der DE 102 02 190 A1 ist eine Verriegelungsvorrichtung für Container mit einem um eine Achse drehbar gelagerten Drehzapfen bekannt, der ein senkrecht zur Drehzapfenachse verschiebbar gelagertes Steuergehäuse hat, an dem eine erste und eine zweite Kulisse vorgesehen sind, wobei die Kulissen so mit dem Drehzapfen zusammenwirken, dass er von einer Öffnungsstellung in eine Verriegelungsstellung bewegbar ist.

Ferner ist aus dem DE 71 36 868 U eine Vorrichtung zur lösbaren Verriegelung eines Containers auf einem Fahrgestell mit einem drehbaren und durch einen Spindeltrieb heb- und senkbaren Verriegelungsbolzen bekannt, der einen in einer Öffnung des Containers durch Drehung festlegbaren Verriegelungskopf aufweist, wobei der Verriegelungsbolzen bei einer Achsialbewegung zugleich mit einem radial abstehenden Führungszapfen in einer kulissenförmigen Führungsbahn drehbar gelagert ist.

Ferner ist aus der US 6,692,203 B2 eine automatische Containerverriegelungsvorrichtung bekannt, die einen in einem Gehäuse aufgenommenen dreh- und absenkbaren Verriegelungszapfen mit Pilzkopf aufweist, der in einer schraubenförmigen Führung um ca. 90° beim Absenken drehbar ausgebildet ist. Dabei wird ein den Verriegelungszapfen umgebendes Gehäuseteil durch das Containergewicht vertikal entgegen einer Federkraft abgesenkt, wobei ein Mitnahmemittel zwischen Verriegelungszapfen und diesem Gehäuseteil vorgesehen ist, so dass sich beim Absenken der Verriegelungszapfen über die schraubenförmige Führung absenkt und dreht. Ein zusätzliches Sicherungsmittel, welches die Verriegelungsvorrichtung im Transportzustand sichert, ist hierin jedoch nicht verwirklicht. Der mit der Vorrichtung gemäß US 6,692,203 B2 verriegelte Container wird durch einfaches Anheben des Containers ohne eine gesonderte Entsicherung entriegelt.

Ausgehend von der US 6,692,203 B2 ist es Aufgabe der Erfindung, eine Verriegelungsvorrichtung anzugeben, die eine zusätzliche Sicherung im Transportzustand aufweist, um eine unbeabsichtigte Entladung eines Containers vom Transportfahrzeug zu vermeiden.

Gelöst wird diese Aufgabe bei einer eingangs genannten Verriegelungsvorrichtung dadurch, dass ein Sicherungsmittel vorgesehen ist, das eine unbeabsichtigte Rückstellung aus dem erreichten Transportzustand verhindert, wobei das Sicherungsmittel eine Feder vorbelastete Sperre aufweist, die bei Erreichen des Transportzustandes Feder belastet in eine Sicherungsposition verrutscht oder verschwenkt, wobei der Sperre eine Falle zugeordnet ist, die bei manueller oder ferngesteuerter Betätigung der Sperre diese in einer Position hält, in der die Sicherung des Transportzustandes deaktiviert ist.

Die den Verriegelungszapfen umgebende Druckplatte wird beim Aufsetzen eines Containers durch die Auflast des Containers in das Gehäuse der Verriegelungsvorrichtung eingedrückt. Durch das Mitnahmemittel zwischen Druckplatte und Verriegelungszapfen wird beim Aufsetzen des Containers und dem damit zusammenhängenden Absenken der Druckplatte der Verriegelungszapfen ebenfalls abgesenkt. Da jedoch der Verriegelungszapfen im Gehäuse über eine schraubenförmige Führung so dreh- und absenkbar um seine vertikale Achse geführt ist, dass er sich bei der Absenkbewegung zwangsweise um ca. 90° drehen muss, erfolgt ein Hintergreifen des Eckbeschlages des Containers durch den darin aufgenommenen Pilzkopf des Verriegelungszapfens. Der Container ist durch den verdrehten und abgesenkten Pilzkopf des Verriegelungszapfens formschlüssig auf der Ladefläche, auf der die Verriegelungsvorrichtung befestigt ist, festgelegt.

Um jedoch ein Entladen des Containers von der Ladefläche ohne materialgefährdenden Kraftaufwand zu ermöglichen, ist der Sperre eine Falle zugeordnet, die bei manueller oder ferngesteuerter Betätigung der Sperre diese in einer Position hält, in der die Sicherung des Transportzustandes deaktiviert ist. In der einfachsten Ausgestaltung wird die Sicherung durch manuelles Betätigen der Sperre freigegeben, so dass beim Anheben des Containers von der Ladefläche der Pilzkopf des Verriegelungszapfens über den Eckbeschlag des Containers sowie über das Mitnahmemittel die Druckplatte mit angehoben wird und sich somit der Verriegelungszapfen in umgekehrter Drehrichtung entsprechend der schraubenförmigen Führung um 90° in seine Ausgangsstellung zurückdreht. Der Container kann dann frei abgehoben werden.

Eine bevorzugte Ausgestaltung des Mitnahmemittels wird dadurch erreicht, dass der Verriegelungszapfen einen Wellenabschnitt aufweist und dass das Mitnahmemittel aus einer am Wellenabschnitt in einer Nut angeordneten Scheibe und einer zur Scheibe zugeordneten Führung an der Druckplatte besteht. Alternativ kann das Mitnahmemittel auch in Form einer in dem Verriegelungszapfen in einem Wellenabschnitt in radialer Ebene eingeschnittene Ringnut ausgebildet sein, in die zugeordnete Nocken oder Vorsprünge in der Druckplatte eingreifen. Wichtig ist, dass das Mitnahmemittel den Verriegelungszapfen bei der Abwärtsbewegung der Druckplatte über das Mitnahmemittel sicher mitnimmt und gleichzeitig ein Verdrehen des Verriegelungszapfens erlaubt.

Um eine unbeabsichtigte Rückstellung aus dem erreichten Transportzustand zu verhindern, ist ein Sicherungsmittel vorgesehen. Beispielsweise kann das Sicherungsmittel eine verschieb- oder verschwenkbare Falle sein, die bei Bedarf manuell entriegelt werden kann. Bevorzugt weist das Sicherungsmittel eine Feder vorbelastete Sperre auf, die bei Erreichen des Transportzustandes Feder belastet in eine Sicherungsposition verrutscht oder verschwenkt. In dieser Ausgestaltung wird ein unbeabsichtigtes Lösen des Containers von der Ladefläche auch bei starken Vertikalkräften, beispielsweise bei Gefahr- und Unfallsituationen im Verkehr, verhindert.

Wenn ein Spannmittel vorgesehen ist, das den Verriegelungszapfen mit seinem Pilzkopf bei Erreichen des Transportzustandes in das Gehäuse einziehend spannt, wird neben der rein mechanisch erreichten formschlüssigen Verriegelung noch eine Verspannung des Eckbeschlages des Containers auf der Ladefläche erreicht. Vorteilhaft wird damit eine mögliche Lose zwischen Container und Ladefläche, vermieden. Entsprechend werden auch Maßunterschiede in der Stärke des Eckbeschlages sowie etwaige Verwindungen im Container ausgeglichen.

Eine besonders bevorzugte Ausführungsform des Sicherungs- und Spannmittels ergibt sich dadurch, dass die Sperre eine Auflaufschräge hat, wobei die Feder zur Vorbelastung der Sperre auch das Spannmittel ist.

Um beim Entladevorgang die zwischen den sich drehenden Pilzkopf des Verriegelungszapfens und dem Eckbeschlag des Containers entstehende Reibkraft zu minimieren, ist eine erste Druckfeder zwischen dem Gehäuse und dem Verriegelungszapfen vorgesehen, die den Verriegelungszapfen in Richtung der ausgefahrenen Position (Ausgangszustand) vorbelastet. Alternativ kann die Feder auch zwischen Druckplatte und Verriegelungszapfen eingefügt werden.

Um ferner die Druckplatte in ihrer angehobenen Ausgangsposition sicher vorhalten zu können und ebenfalls Reibkräfte beim Entladevorgang weitgehend zu minimieren, sind zwischen Druckplatte und Gehäuse weitere Druckfedern vorgesehen, die die Druckplatte in Richtung der ausgefahrenen Position (Ausgangszustand) vorbelastet. Alternativ kann die Druckplatte in Reibkontakt in dem Gehäuse geführt sein, so dass die Druckplatte nach dem Entladevorgang ohne Federkraftbeaufschlagung im Ausgangszustand verbleibt.

Nachfolgend wird ein Ausführungsbeispiel der Erfindung anhand der beiliegenden Zeichnungen detailliert beschrieben.

Darin zeigt:
- Fig. 1: in einer räumlichen Ansicht eine erfindungsgemäße Verriegelungsvorrichtung im Ausgangszustand,
- Fig. 2: die Verriegelungsvorrichtung in einem räumlichen Halbschnitt entlang der in Fig. 1 mit II-II gekennzeichneten Fläche, weiterhin im Ausgangszustand,
- Fig. 3: die Verriegelungsvorrichtung in einem Halbschnitt entlang der in Fig. 1 mit II-II gekennzeichneten Fläche in einem Zwischenzustand,
- Fig. 4: die Verriegelungsvorrichtung in einem Halbschnitt entlang der Fläche II-II in verriegeltem Zustand,
- Fig. 5: die Verriegelungsvorrichtung in einem Halbschnitt entlang der Fläche II-II, in gespanntem Zustand,
- Fig. 6: die Verriegelungsvorrichtung in einem Halbschnitt entlang der Fläche II-II in entriegeltem Zustand.

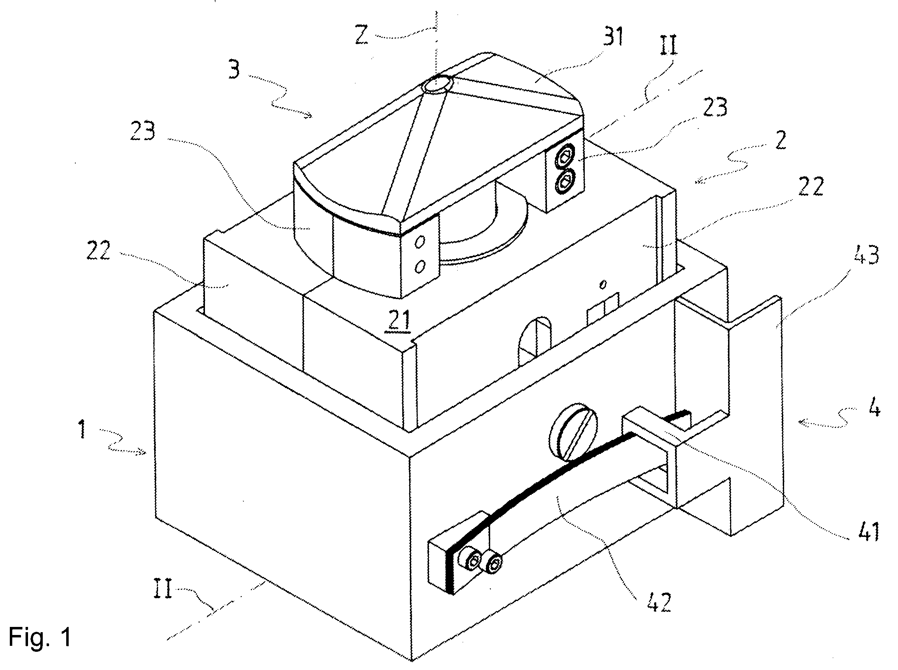

In Fig. 1 ist eine Verriegelungsvorrichtung in einer bevorzugten Ausführungsform in einer räumlichen Ansicht dargestellt. Die Verriegelungsvorrichtung weist ein Gehäuse 1, das im Wesentlichen eine oben offene Kastenform aufweist, auf. Ferner weist die Verriegelungsvorrichtung eine in dem Gehäuse 1 vertikal verschiebbar geführte Druckplatte 2 auf, die im Wesentlichen eine unten offene Kastenform aufweist und in das Gehäuse 1 eintaucht. Weiter weist die Verriegelungsvorrichtung einen Verriegelungszapfen 3 auf, der an seinem oberen Ende einen Pilzkopf 31 aufweist. Der Verriegelungszapfen 3 ist um eine Vertikelachse Z drehbar gelagert.

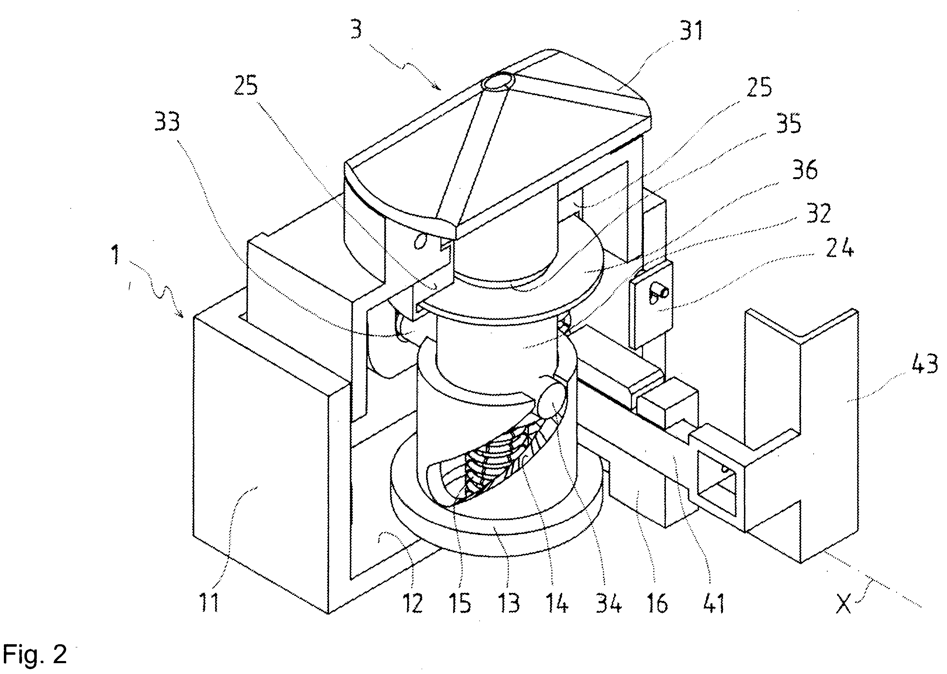

Das Gehäuse 1 weist vertikal orientierte Seitenwände 11 und einen Boden 12 (siehe Fig. 2) auf. Am Boden 12 des Gehäuses 1 ist ein Führungselement 13 angeordnet, das eine zylindrische Aufnahme für einen Wellenabschnitt 32 des Verriegelungszapfens 3 aufweist. Ferner sind in der zylindrischen Mantelfläche des Führungselements 13 zwei schraubenförmig angeordnete Führungen 14, 14 vorgesehen. Den schraubenförmigen Führungen 14, 14 sind am Wellenabschnitt 32 des Verriegelungszapfens 3 zwei diametral gegenüberliegend angeordnete Zapfen 33, 34 zugeordnet, die in jeweils eine schraubenförmige Führung 14 des Führungselementes 13 eintauchen. Für Verriegelungszwecke weist der in Fig. 2 nach hinten zeigende Zapfen 33 größere Länge als der kurze Zapfen 34 auf. Ferner ist im Wellenabschnitt 32 oberhalb des Führungselementes 13 eine in Radialebene umlaufende Nut 35 vorgesehen, in der eine Scheibe 36 mit einem Höhenspiel aufgenommen ist.

Die Druckplatte 2 weist eine Aufstandsplatte 21 auf. Die Aufstandplatte 21 ist geringfügig kleiner als die durch die Seitenwände 11 des Gehäuses 1 definierte Öffnung. Von der Aufstandsfläche 21 ragen Führungswände 22 nach unten in die Öffnung des Gehäuses 1 hinein. Von der Aufstandsfläche 21 stehen zwei Vorsprünge 23 nach oben hervor, die von dem Pilzkopf 31 des Verriegelungszapfens 3 in seinem in Fig. 1 dargestellten Ausgangszustand überdeckt sind. Die Außenabmessung des Pilzkopfes 31 und der darunter liegenden Vorsprünge 23, 23 entsprechen den standardisierten Größen, um im Eckbeschlag eines Containers einführbar zu sein.

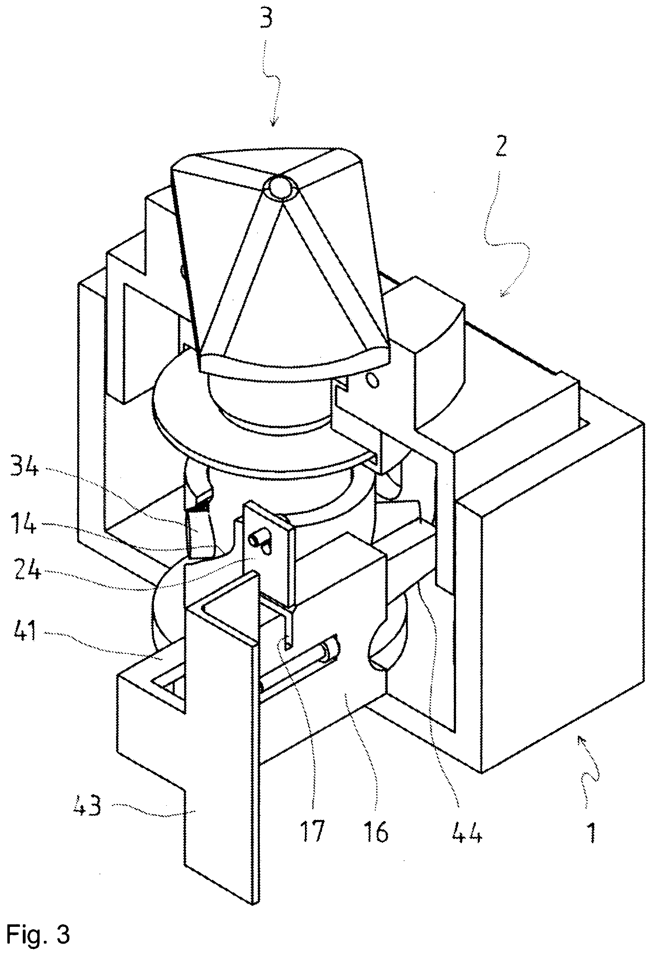

In Fig. 1 ist ferner der äußere Teil eines Sicherungsmittels 4 sichtbar. Es besteht aus einer verschiebbaren Sperre 41 und einer mit der verschiebbaren Sperre wirkverbundenen Blattfeder 42, die am anderen Ende mit einer Seitenwand 11 des Gehäuses 1 verschraubt ist. Die Sperre 41 ist in Einschiebrichtung auf das Gehäuse 1 durch die Blattfeder 42 vorbelastet, wie aus Fig. 1 ersichtlich ist. In Fig. 2 und 3 ist die Sperre 41 entsprechend des Halbschnittes auch mit ihrem Innenleben dargestellt. Die Sperre 41 ist in einem Sperrhalter 16 in Lateralrichtung X verschiebbar gehaltert. Am auswärtigen Ende der Sperre 41 ist ein Betätigungsgriff 43 angeordnet. Am innenwärtigen Ende der Sperre 41 ist eine Auflaufschräge 44 vorgesehen (siehe Fig. 3).

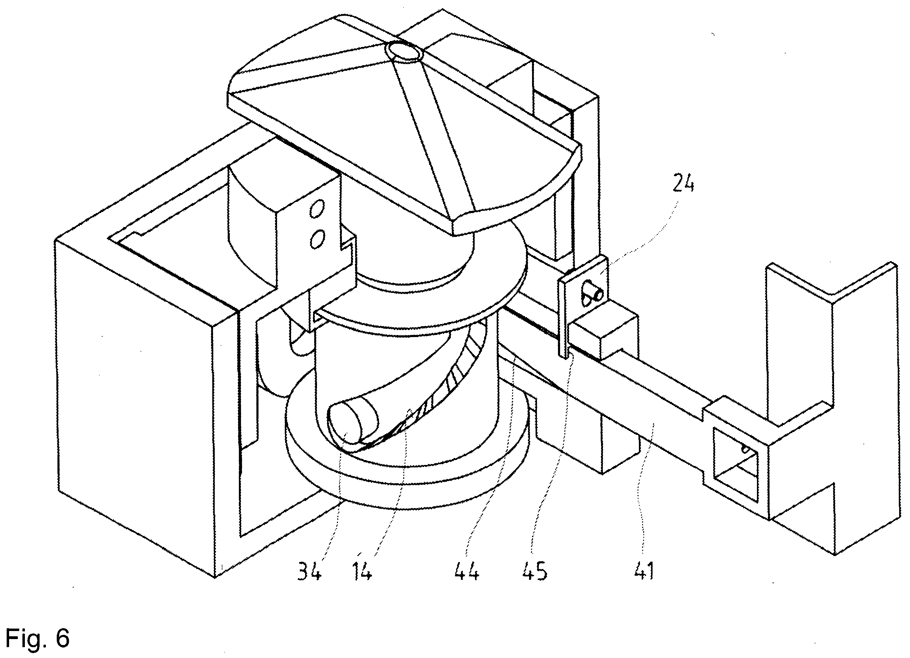

Innenseitig einer Führungswand 22 der Druckplatte 2 ist oberhalb des Sperrhalters 16 eine Falle 24 angeordnet, die mit einer Aussparung 17 in dem Sperrhalter 16 zusammenwirkt. Ferner ist in der Sperre 41 eine Nut 45 vorgesehen, in die die Falle 24 zur Freigabe des Transportzustandes eingreifen kann (siehe Fig. 6).

Ferner ist in Fig. 2 zwischen dem Boden 12 des Gehäuses 1 und der Unterseite des Verriegelungszapfens 3 innerhalb des Führungselementes 13 eine Druckfeder 15 angeordnet, die den Verriegelungszapfen 3 federbelastet in Richtung der Vertikalachse Z in den in Fig. 1 und 2 dargestellten Ausgangszustand drängt.

Nachfolgend wird die Wirkungsweise der Verriegelungsvorrichtung unter Bezugnahme auf die beiliegenden Figuren beschrieben.

Die Verriegelungsvorrichtung befindet sich bei einer noch nicht beladenen (leeren) Ladefläche in dem in Fig. 1 und 2 dargestellten Ausgangszustand. Wird nun ein Container mit seinen genormten Eckbeschlägen auf die Verriegelungsvorrichtung auf der Ladefläche des zu beladenden Tragwagens (Chassis oder Eisenbahntragwagen) aufgesetzt, so wird zunächst der Pilzkopf 31 des Verriegelungszapfens 3 sowie die Vorsprünge 23, 23 in eine genormte Öffnung des Eckbeschlags des Containers aufgenommen. Bei weiterer Absetzbewegung lastet der Eckbeschlag auf der Aufstandsfläche 21 der Druckplatte 2 auf. Beim weiteren Absetzen wird die Druckplatte 2 in das Gehäuse 1 der Verriegelungsvorrichtung abgesenkt.

Mittels der Mitnahmemittel, nämlich der an der Druckplatte 2 vorgesehenen Führung 25, der darin aufgenommenen Scheibe 36 und der Nut 35 im Wellenabschnitt 32 des Verriegelungszapfens 3 wird die Abwärtsbewegung des Containers und damit der Druckplatte 2 auf den Verriegelungszapfen 3 übertragen, der sich ebenfalls nach unten bewegen muss. Durch die mittels der Mitnahmemittel 25, 36 und 35 erzwungene Abwärtsbewegung des Verriegelungszapfens und den in dem Führungselement 13 mit seinen schraubenförmigen Führungen 14 geführten Zapfen 33, 34 des Wellenabschnitts 32 verdreht sich der Verriegelungszapfen 3 mit seinem am oberen Ende fest angeordneten Pilzkopf 31. Dieser Zwischenzustand ist in Fig. 3 mit einer Verdrehung von ungefähr 45° zum Ausgangszustand dargestellt. In Fig. 3 ist eine schraubenförmige Führung 14 mit dem kurzen Zapfen 34 sichtbar. Auf der diametral gegenüberliegenden Seite ist der lange Zapfen 33 erkennbar, der mit dem innenwärtigen Ende der Sperre 41 in Berührung gelangt.

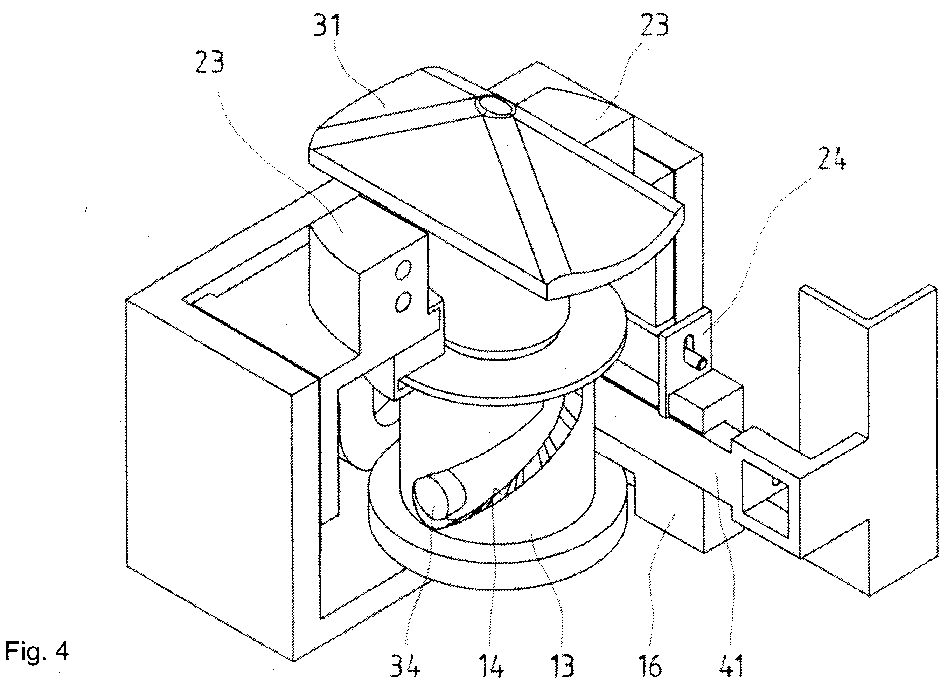

Beim weiteren Absenken des Containers und damit der zwangsweisen weiteren Absenkung der Druckplatte 2 und des Verriegelungszapfens 3 mit weiterer Drehung des Verriegelungszapfens 3 drängt der längere Zapfen 33 die Sperre 41 gegen die Blattfederkraft 42 nach außen. Nach weiterem Absenken des Containers rutscht der lange Zapfen 33 am innenwärtigen Ende der Sperre 41 vorbei, so dass dann der in Fig. 4 dargestellte Zustand erreicht wird. Der Verriegelungszapfen ist durch Vorbeirutschen des langen Zapfens 33 an dem innenwärtigen Ende der Sperre 41 vor unerwünschter Rückstellung und Rückdrehung gesichert. Er ist jedoch noch nicht gespannt.

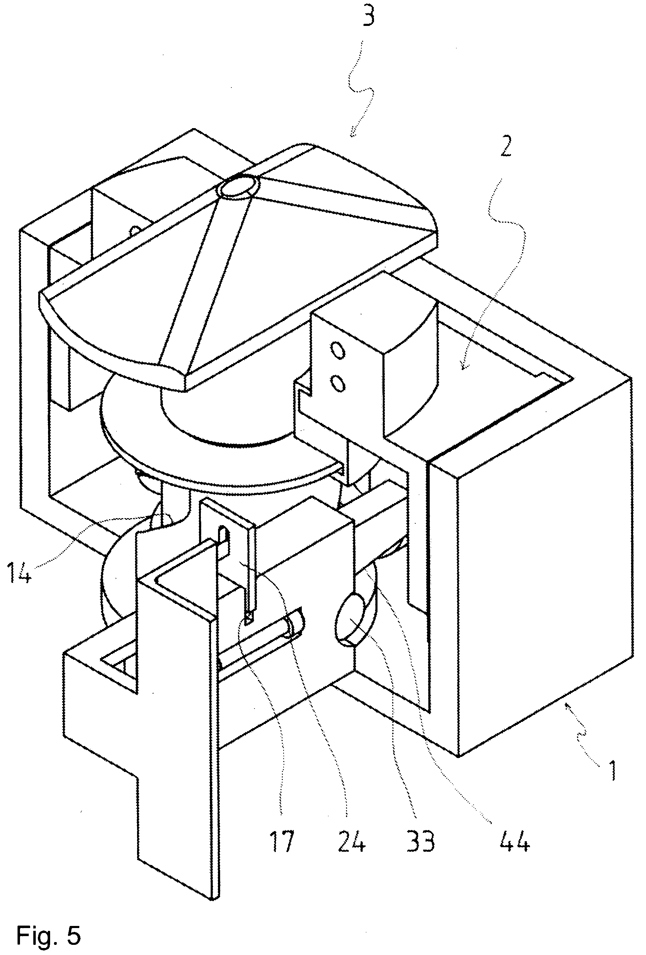

Das nach unten gerichtete Spannen des Pilzkopfes 31 des Verriegelungszapfens 3 wird dann nachfolgend durch das Zurückdrängen der Sperre 41 in eine in Fig. 5 dargestellte Position erreicht. Dabei wirkt die Blattfeder 42, die durch das Vorbeidrängen des langen Zapfens 33 am innenwärigen Ende der Sperre 41 gespannt wurde, federbelastet auf die Sperre 41 und drängt die Sperre 41 in das Gehäuse 1 hinein, womit das innenwärtige Ende der Sperre 41 mit seiner Auflaufschräge 44 am langen Zapfen 33 entlanggleitet und den Verriegelungszapfen 3 um die in der Nut 35 mit der eingesetzten Scheibe 36 vorgesehene Lose nach unten drängen kann. Dieser verriegelte und gespannte Transportzustand ist in Fig. 5 dargestellt. Insbesondere ist im Vergleich von Fig. 4 zu Fig. 5 zu erkennen, dass die Scheibe 36 nunmehr am oberen Ende der Nut 35 anliegt. Ferner ist die Sperre 41 unter der Kraft der Blattfeder 42 weitestgehend in das Gehäuse 1 hineingedrückt, wobei der lange Zapfen 33 des Verriegelungszapfens 3 mittels der Auflaufschräge 44 nach unten gespannt ist.

In Fig. 6 ist dann der entriegelte Zustand dargestellt. Dabei wurde über Betätigungsgriff 43 die Sperre 41 gegen die Kraft der Blattfeder 42 bis zum Einrasten der Falle 24 in die Fallennut 45 herausgezogen. Durch die Verrastung der Falle 24 in der Fallennut 45 kann das Sicherungsmittel 4 nicht wieder verriegeln. In diesem Zustand ist der lange Zapfen 33 des Verriegelungszapfens 3 freigegeben, so dass der Verriegelungszapfen 3 bereits durch die Druckfeder 15 um die zwischen Nut 35 und Scheibe 36 vorgesehene Lose nach oben gedrängt wird. Sobald nun der Container abgehoben wird, folgt unmittelbar die Druckplatte 2 dem sich abhebenden Eckbeschlag des Containers, wobei der Pilzkopf 31 des Verriegelungszapfens 3 von der Druckfeder 15 unterstützt mitanhebt und sich der Pilzkopf weitgehend frei, also mit nur geringem Reibungswiderstand in seine Ausgangslage entsprechend der schraubenförmigen Führung 14 und den darin laufenden Zapfen 33, 34 zurückdrehen kann. Da beim Anheben des Containers und einhergehend damit der Druckplatte 2 sich ebenfalls die an der Druckplatte 2 befestigte Falle 24 aus der Fallennut 45 herausbewegt, wird das Sicherungsmittel 4 mittels der gespannten Blattfeder 42 in seine Ausgangsstellung gemäß Fig. 1 zurückbewegt. Nunmehr ist die Ladefläche zur erneuten Beladung mit einem Container vorbereitet. Die Verriegelungseinrichtungen befinden sich wieder im Ausgangszustand.

### Bezugszeichenliste

- 1: Gehäuse
- 11: Seitenwand
- 12: Boden
- 13: Führungselement
- 14: schraubenförmige Führung
- 15: Druckfeder
- 16: Sperrhalter
- 17: Aussparung

- 2: Druckplatte
- 21: Aufstandsfläche
- 22: Führungswand
- 23: Vorsprung
- 24: Falle
- 25: Führung

- 3: Verriegelungszapfen
- 31: Pilzkopf
- 32: Wellenabschnitt
- 33: langer Zapfen
- 34: kurzer Zapfen
- 35: Nut
- 36: Scheibe

- 4: Sicherungsmittel
- 41: Sperre
- 42: Feder, Blattfeder
- 43: Betätigungsgriff
- 44: Auflaufschräge
- 45: Fallennut
- X: Lateralrichtung
- Z: Vertikalachse

## Patentansprüche

1. Verriegelungsvorrichtung zur Verriegelung eines Containers auf einer Ladefläche, insbesondere für Straßenfahrzeuge oder Eisenbahntragwagen,
- mit einem Gehäuse (19),
- mit mindestens einem um eine vertikale Achse (Z) in einer schraubförmigen Führung (14) um ca. 90° dreh- und absenkbaren Verriegelungszapfen (3) mit Pilzkopf (31), der im Ausgangszustand über eine der Öffnungen in einem der Eckbeschläge des Containers eingeführt werden kann und im Transportzustand den Container über die Öffnung des Eckbeschlags hintergreifende Teile des Pilzkopfes (31) sichert, und
- mit einem Mechanismus zur Betätigung des Verriegelungszapfens (3),
wobei eine den Verriegelungszapfen (3) umgebende, im Gehäuse (1) vertikal verschiebbar geführte Druckplatte (2) vorgesehen ist, die in vertikaler Richtung vom Ausgangszustand mittels des auflastenden Containers in das Gehäuse absenkbar ist, wobei ein Mitnahmemittel (25, 35, 36) zwischen Verriegelungszapfen (3) und Druckplatte (2) vorgesehen ist, so dass beim Absenken der Druckplatte (2) der Verriegelungszapfen (3) abgesenkt und gleichzeitig über die schraubenförmige Führung (14) gedreht wird, **dadurch gekennzeichnet, dass** ein Sicherungsmittel (4) vorgesehen ist, das eine unbeabsichtigte Rückstellung aus dem erreichten Transportzustand verhindert, wobei das Sicherungsmittel (4) eine Feder (42) vorbelastete Sperre (41) aufweist, die bei Erreichen des Transportzustandes Feder (42) belastet in eine Sicherungsposition verrutscht oder verschwenkt, wobei der Sperre (41) eine Falle (24) zugeordnet ist, die bei manueller oder ferngesteuerter Betätigung der Sperre (41) diese in einer Position hält, in der die Sicherung des Transportzustandes deaktiviert ist.

2. Verriegelungsvorrichtung nach Anspruch 1, **dadurch gekennzeichnet, dass** der Verriegelungszapfen (3) einen Wellenabschnitt (32) aufweist, in dem eine Nut vorgesehen ist, in die eine der Nut zugeordnete Führung an der Druckplatte (2) eingreift.

3. Verriegelungsvorrichtung nach Anspruch 1, **dadurch gekennzeichnet, dass** der Verriegelungszapfen (3) einen Wellenabschnitt (32) aufweist und dass das Mitnahmemittel aus einer am Wellenabschnitt (32) in einer Nut (35) angeordneten Scheibe (36) und einer zur Scheibe (36) zugeordneten Führung (25) an der Druckplatte (2) besteht.

4. Verriegelungsvorrichtung nach einem der vorangehenden Ansprüche, **dadurch gekennzeichnet, dass** ein Spannmittel vorgesehen ist, das den Verriegelungszapfen (3) mit seinem Pilzkopf (31) bei Erreichen des Transportzustandes in das Gehäuse einziehend spannt.

5. Verriegelungsvorrichtung nach Anspruch 4, **dadurch gekennzeichnet, dass** die Sperre eine Auflaufschräge (44) hat, wobei die Feder (42) zur Vorbelastung der Sperre (41) auch das Spannmittel ist.

6. Verriegelungsvorrichtung nach einem der vorangehenden Ansprüche, **dadurch gekennzeichnet, dass** eine erste Druckfeder (15) zwischen dem Gehäuse (1) oder der Druckplatte (2) und dem Verriegelungszapfen (3) vorgesehen ist, die den Verriegelungszapfen (3) in Richtung der ausgefahrenen Position (Ausgangszustand) vorbelastet.

7. Verriegelungsvorrichtung nach einem der vorangehenden Ansprüche, **dadurch gekennzeichnet, dass** zwischen Druckplatte (2) und Gehäuse (1) weitere Druckfedern vorgesehen sind, die die Druckplatte in Richtung der ausgefahrenen Position (Ausgangszustand) vorbelasten.

## Claims

1. A locking device for locking a container onto a loading surface, in particular for road vehicles or rail carrier wagons,
- with a housing (19),
- with at least one locking pin (3) being rotatable and lowerable by about 90° around a vertical spindle (Z) in a helical guide (14) and having a mushroom head (31), which can be inserted in the initial state through one of the openings in one of the corner fittings of the container and secures the container in the transport state via parts of the mushroom head (31) engaging behind the opening of the corner fitting, and
- with a mechanism for actuating the locking pin (3),
wherein a in the housing vertically displaceably guided pressure plate (2) surrounding the locking pin (3) is provided, which can be lowered in the vertical direction from the initial state into the housing by means of the container load, wherein an entrainment means (25, 35, 36) is provided between the locking pin (3) and the pressure plate (2), so that during lowering of the pressure plate (2) the locking pin (3) is lowered and simultaneously rotated via the helical guide (14), **characterised in that** a securing means (4) is provided, which prevents an unintentional reset from the achieved transport state, wherein the securing means (4) includes a spring (42) pre-loaded lock (41) shifting or pivoting spring (42) pre-loaded into a securing position on reaching the transport state, wherein the lock (41) is associated with a latch (24) keeping the lock (41), when actuated manually or remote-controlled, in a position in which the securing of the transport state is disabled.

2. A locking device according to claim 1, **characterised in that** the locking pin (3) has a shaft portion (32), in which a groove is provided, in which engages a guide on the pressure plate (2) associated with the groove.

3. A locking device according to claim 1, **characterised in that** the locking pin (3) has a shaft portion (32) and that the entrainment means consists of a disc (36) arranged on a shaft portion (32) in a groove (35) and a guide (25) on the pressure plate (2) associated with the disc (36).

4. A locking device according to one of the preceding claims, **characterised in that** a clamping means is provided, clamping the locking pin (3) with its mushroom head (31) retracting into the housing upon reaching the transport state.

5. A locking device according to claim 4, **characterised in that** the lock has a ramp (44), wherein the spring (42) for pre-loading the lock (41) is also the clamping means.

6. A locking device according to one of the preceding claims, **characterised in that** a first pressure spring (15) is provided between the housing (1) or the pressure plate (2) and the locking pin (3), pre-loading the locking pin (3) in the direction of the extended position (initial state).

7. A locking device according to one of the preceding claims, **characterised in that** further pressure springs are provided between the pressure plate (2) and the housing (1), pre-loading the pressure plate in the direction of the extended position (initial state).

## Revendications

1. Dispositif de verrouillage pour verrouiller un conteneur sur une surface de chargement, en particulier pour des véhicules routiers ou des wagons porteurs ferroviaires,
- comprenant un logement (19),
- comprenant au moins une tige de verrouillage (3) pouvant être tournée et abaissée d'environ 90° sur un axe vertical (Z) dans un guide hélicoïdal (14) avec une tête convexe (31), qui peut être introduite dans une des ferrures d'angle du conteneur par une des ouvertures dans l'état de départ, et sécurise le conteneur dans l'état de transport par des pièces de la tête convexe (31) engageant par l'arrière l'ouverture de la ferrure d'angle, et
- comprenant un mécanisme d'actionnement de la tige de verrouillage (3),
sachant qu'une plaque de pression (2) entourant la tige de verrouillage (3), dirigée en pouvant être déplacée verticalement dans le logement (1) est prévue, laquelle peut être abaissée dans le logement dans le sens vertical depuis l'état de départ au moyen du conteneur à charger, sachant qu'un moyen d'entraînement (25, 35, 36) est prévu entre la tige de verrouillage (3) et la plaque de pression (2), de telle sorte que lorsque la plaque de pression (2) est abaissée, la tige de verrouillage (3) est abaissée et tournée parallèlement par le guide hélicoïdal (14), **caractérisé en ce qu'**un moyen de sécurisation (4) est prévu, qui empêche un renvoi involontaire depuis l'état de transport obtenu, sachant que le moyen de sécurisation (4) présente un blocage (41) précontraint par ressort (42), qui, lorsque l'état de transport est atteint, glisse ou bascule le ressort (42) par précontrainte dans une position sécurisée, sachant que le blocage (41) a un loqueteau (24) qui maintient le blocage (41), lors de l'actionnement manuel ou télécommandé de celui-ci, dans une position dans laquelle la sécurisation de l'état de transport est désactivée.

2. Dispositif de verrouillage selon la revendication 1, **caractérisé en ce que** la tige de verrouillage (3) présente un tronçon d'arbre (32) dans lequel une rainure est prévue dans laquelle s'engage un guide sur la plaque de pression (2) correspondant à la rainure.

3. Dispositif de verrouillage selon la revendication 1, **caractérisé en ce que** la tige de verrouillage (3) présente un tronçon d'arbre (32) et que le moyen d'entraînement est composé d'une rondelle (36) disposée dans une rainure (35) sur le tronçon d'arbre (32) et d'un guide (25) sur la plaque de pression (2) correspondant à la rondelle (36).

4. Dispositif de verrouillage selon l'une des revendications précédentes, **caractérisé en ce qu'**un moyen de serrage est prévu qui serre la tige de verrouillage (3) avec sa tête convexe (31) en la rentrant dans le logement lorsqu'elle atteint l'état de transport.

5. Dispositif de verrouillage selon la revendication 4, **caractérisé en ce que** le blocage a un biseau (44), sachant que le ressort (42) pour pré-contraindre le blocage (41) est également le moyen de serrage.

6. Dispositif de verrouillage selon l'une des revendications précédentes, **caractérisé en ce qu'**un premier ressort de pression (15) est prévu entre le logement (1) ou la plaque de pression (2) et la tige de verrouillage (3), qui pré-contraint la tige de verrouillage (3) en direction de la position sortie (état de départ).

7. Dispositif de verrouillage selon l'une des revendications précédentes, **caractérisé en ce que** des ressorts de pression supplémentaires sont prévus entre la plaque de pression (2) et le logement (1), qui pré-contraignent la plaque de pression en direction de la position sortie (état de départ).
